# EUROPÄISCHE PATENTSCHRIFT

(11) **EP 2 633 570 B1**
(45) Veröffentlichungstag und Bekanntmachung des Hinweises auf die Patenterteilung: **22.02.2017**
(21) Anmeldenummer: 11779581.5
(22) Anmeldetag: 27.10.2011
(51) Int. Cl.: H01M 2/14, H01M 2/00, H01M 2/02, H01M 2/26, H01M 2/30

(54) **ANORDNUNG EINES ELEKTRODENSTAPELS EINER ELEKTROCHEMISCHEN ENERGIESPEICHEREINRICHTUNG**
ASSEMBLY OF AN ELECTRODE STACK OF AN ELECTROCHEMICAL ENERGY STORAGE DEVICE
AGENCEMENT D'UNE PILE D'ÉLECTRODES D'UN DISPOSITIF D'ACCUMULATION D'ÉNERGIE ÉLECTROCHIMIQUE

(30) Priorität: 29.10.2010 DE 102010050040
(43) Veröffentlichungstag der Anmeldung: 04.09.2013
(73) Patentinhaber: Li-Tec Battery GmbH, 01917 Kamenz (DE)
(72) Erfinder: SCHAEFER, Tim, 99768 Harztor (DE); HOHENTHANNER, Claus-Rupert, 63457 Hanau (DE)
(74) Vertreter: JENSEN & SON
(86) Internationale Anmeldenummer: PCT/EP2011/005434
(87) Internationale Veröffentlichungsnummer: WO 2012/055560

(56) Entgegenhaltungen:
- DE-A1-102009 013 345
- US-B1- 6 743 546

## Beschreibung

Die vorliegende Erfindung betrifft die Anordnung des Elektrodenstapels einer elektrochemischen Energiespeichereinrichtung, vorzugsweise einer Lithium-Ionen-Batterie.

Da der Bedarf an Energiespeichereinrichtungen, insbesondere an Lithium-Ionen-Batterien stetig wächst, ist eine schnelle, kostensparende und effektive Produktion von solchen Energiespeichereinrichtungen unabdingbar. Die Produktion, insbesondere der Zusammenbau der einzelnen Komponenten kann sich als schwierig erweisen, weshalb die Gefahr besteht, viel Ausschuss zu produzieren, wodurch die Produktions- und Kosteneffizienz deutlich gesenkt wird. Ein als kritisch anzusehender Produktionsschritt ist das Einbringen des Elektrodenstapels in die Umhüllung, und das Durchtränken des Elektrodenstapels mit Elektrolytflüssigkeit. Hierbei kann es passieren, dass die oftmals aus Schichten bestehenden Stapel gegeneinander verrutschen und beispielsweise einen Kurzschluss verursachen oder die Ladekapazitäten erniedrigen.

Ein weiteres Problem besteht bei der Verwendung von Energiespeichereinrichtungen, insbesondere von Lithium-Ionen-Batterien. Die Anforderungen an Energiespeichereinrichtungen haben sich dahingehend geändert, dass nicht nur ein zuverlässiger Energielieferant erwartet wird, vielmehr muss dieser auch unter starken Belastungen (beispielsweise Temperaturschwankungen, mechanische Belastungen, etc.) lange Zeit funktionieren. Vor allem bei der Anwendung im Automobilbereich ist es sehr wichtig, dass die Energiespeichereinrichtung starken mechanischen Belastungen und Schwingungen standhält, wie sie beispielsweise auftreten können, wenn ein Fahrzeug über unterschiedlichste Bodenbeläge fährt. Hierbei ist es essentiell, dass zum einen die Schichten der Elektrodenstapel sich nicht voneinander lösen oder verrutschen können, und des Weiteren, dass der Elektrodenstapel selbst sich innerhalb der Umhüllung nicht verschiebt, wodurch beispielsweise der Stromableiter abreißen könnte.

Aus dem Stand der Technik sind verschiedene Fixiermöglichkeiten zum Fixieren von Elektrodenstapeln bekannt, wie beispielsweise aus DE 102 51 230 B4, in der eine schwingungsfeste elektrochemische Zelle mit Einbuchtungen im Gehäuse offenbart wird, an denen der Elektrodenstapel am Gehäuse fixiert werden kann.

Aus der DE 10 2009 013 345 A1 ist ein Elektrodenstapel bekannt, der wenigstens eine Kathode, eine Anode und einen Separator mit Elektrolyt aufweist. Die Kathode, die Anode und der Separator sind jeweils plattenförmig ausgebildet. Die Oberfläche des Separators ist wenigstens so groß wie die Oberfläche der Kathode und/oder der Anode. Die plattenförmigen Elemente des Elektrodenstapels sind durch Fixierungsmittel wenigstens teilweise miteinander verbunden.

Der Erfindung liegt die Aufgabe zugrunde, eine Fixierung des Elektrodenstapels bereitzustellen, die insbesondere einfach und kostengünstig anzuwenden ist.

Dies wird erfindungsgemäß durch die Lehre der unabhängigen Ansprüche erreicht. Zu bevorzugende Weiterbildungen der Erfindung sind Gegenstand der Unteransprüche.

Zur Lösung dieser Aufgabe ist, wie im Folgenden ausführlich beschrieben, insbesondere eine Fixiereinrichtung vorgesehen, die zumindest teilweise aus Polypropylen besteht. Der Vorteil dabei ist, dass sich das Polypropylen aufgrund seiner chemischen und physikalischen Eigenschaften besonders einfach in die Anordnung eines Elektrodenstapels bzw. in eine Batteriezelle integrieren lässt. Beispielsweise liegt der Schmelzpunkt von Polypropylen in Abhängigkeit von seinem Kristallisationsgrad zwischen 130°C und 171 °C. Dies kann man sich bei der Herstellung der erfindungsgemäßen Anordnung des Elektrodenstapels zu Nutze machen und die Fixiereinrichtung oder deren Polypropylen aufweisende Abschnitte nachträglich thermisch umformen. Dadurch ist es möglich, die Fixiereinrichtung oder deren Abschnitte zunächst am Elektrodenstapel anzuordnen und zum Beispiel danach durch thermische Behandlung umzuformen, zum Beispiel um diese zwischenzeitlich teilweise oder ganz zu schmelzen. Dadurch ist es insbesondere möglich, die Fixiereinrichtung unter/oder einen mit der Fixiereinrichtung verbundenen Abschnitt des Elektrodenstapels zum Beispiel durch einen Schmelzvorgang mit weiteren Teilen der Elektrodenstapelanordnung, zum Beispiel einer Umhüllung, zu verbinden. Ferner lassen sich Fixiereinrichtungen, die ganz oder teilweise aus Polypropylen bestehen, kostengünstig und komfortabel fertigen, da sich Polypropylen zum Beispiel durch Spritzgießen oder Umformtechniken einfach bearbeiten lässt.

Vorzugsweise weist die Anordnung des Elektrodenstapels eine Umhüllung auf, welche sich insbesondere form- und/oder kraft- und/oder besonders bevorzugt stoffschlüssig mit der Fixiereinrichtung des Elektrodenstapels verbinden, besonders bevorzugt verschweißen, verschmelzen bzw. versiegeln lässt. Insbesondere durch das Verschweißen wird eine besonders zuverlässige Verbindung erreicht.

Ein Elektrodenstapel weist wenigstens eine Kathode, eine Anode und insbesondere einen Separator mit Elektrolyt auf. Kathode, Anode und Separator sind vorzugsweise plattenförmige oder folienartige Elemente.

Die plattenförmigen Elemente des Elektrodenstapels sind durch eine erfindungsgemäße Fixiereinrichtung wenigstens teilweise miteinander verbunden.

Unter einem Elektrodenstapel ist außerdem eine Einrichtung zu verstehen, welche als Baugruppe einer elektrochemischen Zelle auch der Speicherung chemischer Energie und zur Abgabe elektrischer Energie dient. Dazu weist der Elektrodenstapel mehrere plattenförmige Elemente auf, wenigstens zwei Elektroden, Anode und Kathode, und einen Separator, welcher den Elektrolyt wenigstens teilweise aufnimmt. Vorzugsweise sind wenigstens eine Anode, ein Separator und eine Kathode übereinander gelegt bzw. gestapelt, wobei der Separator wenigstens teilweise zwischen Anode und Kathode angeordnet ist. Diese Abfolge von Anode, Separator und Kathode kann sich innerhalb des Elektrodenstapels beliebig oft wiederholen. Die plattenförmigen Elemente können auch zu einem Elektrodenwickel aufgewickelt sein. Der Begriff "Elektrodenstapel" wird in vorzugsweise auch für Elektrodenwickel verwendet. Vor der Abgabe elektrischer Energie wird gespeicherte chemische Energie in elektrische Energie gewandelt. Während des Ladens wird die dem Elektrodenstapel bzw. der galvanischen Zelle zugeführte elektrische Energie in chemische Energie gewandelt und abgespeichert. Vorzugsweise weist der Elektrodenstapel mehrere Elektrodenpaare und Separatoren auf. Besonders bevorzugt sind einige Elektroden untereinander insbesondere elektrisch verbunden. Die Verwendung des Begriffes Elektrodenstapel im Singular schließt nicht aus, dass mehrere Elektrodenstapel gemeint sein können.

Unter einer Anode bzw. einer Anodenschicht ist eine Einrichtung zu verstehen, welche beim Laden positiv geladene Ionen auf Zwischengitterplätzen einlagert. Vorzugsweise ist die Anode dünnwandig ausgebildet, besonders bevorzugt als Metallfolie, welche mit Anodenaktivmaterial beschichtet ist. Vorzugsweise ist die Anode im Wesentlichen rechteckig ausgebildet. Die Anode ist auch zur elektrochemischen Wechselwirkung mit der Kathode bzw. dem Elektrolyt vorgesehen.

Unter einer Kathode bzw. einer Kathodenschicht ist eine Einrichtung zu verstehen, welche beim Entladen bzw. während der Abgabe elektrischer Energie auch Elektronen und positiv geladene Ionen aufnimmt. Vorzugsweise ist die Kathode dünnwandig ausgebildet, besonders bevorzugt als Metallfolie, welche mit Kathodenaktivmaterial beschichtet ist. Vorzugsweise entspricht die Gestalt einer Kathode im Wesentlichen der Gestalt einer Anode des Elektrodenstapels. Die Kathode ist auch zur elektrochemischen Wechselwirkung mit der Anode bzw. dem Elektrolyt vorgesehen.

Im Sinne der Erfindung ist unter einem Separator eine Einrichtung zu verstehen, welche eine Anode von einer Kathode trennt und beabstandet. Der Separator nimmt auch den Elektrolyt wenigstens teilweise auf. Vorzugsweise ist ein Separator dünnwandig ausgebildet, besonders bevorzugt als Polymerfolie. Vorzugsweise entspricht die Gestalt eines Separators im Wesentlichen der Gestalt einer Anode des Elektrodenstapels. Vorzugsweise ist ein Separator mit einem Vlies aus elektrisch nicht leitfähigen Fasern ausgebildet, wobei das Vlies auf mindestens einer Seite mit einem anorganischen Material beschichtet ist. Die EP 1 017 476 B1 beschreibt einen derartigen Separator und ein Verfahren zu dessen Herstellung. Ein Separator mit den oben genannten Eigenschaften ist derzeit unter der Bezeichnung "Separion" von der Evonik Degussa GmbH, Deutschland, erhältlich.

Im Sinne der Erfindung erfolgt durch mindestens eine Fixiereinrichtung eine Fixierung von mindestens einem Element, beispielsweise des Elektrodenstapels oder eines seiner Bestandteile, beispielsweise Anodenschicht, Kathodenschicht oder Separatorschicht.

Im Sinne der Erfindung ist unter "Fixierung" zweier oder mehrerer Elemente zu verstehen, dass die Möglichkeit dieser zwei Elemente, eine Relativbewegung durchzuführen, beschränkt wird. Vorzugsweise wird durch die Fixierung die Beweglichkeit der Elemente in vorzugsweise mindestens einem Freiheitsgrad, zwei Freiheitsgraden oder vorzugsweise allen Freiheitsgraden eingeschränkt, vorzugsweise unterbunden, was vorzugsweise durch mindestens eine Fixiereinrichtung geschehen kann.

Die Fixiereinrichtung verbindet vorzugsweise wenigstens zwei plattenförmige Elemente eines Elektrodenstapels, beispielsweise Anodenschicht, Kathodenschicht oder Separatorschicht, insbesondere kraftschlüssig und/oder stoffschlüssig und/oder formschlüssig miteinander. Eine Fixiereinrichtung dient auch dazu, Relativbewegungen von mindestens zwei plattenförmigen Elementen des Elektrodenstapels, insbesondere eine unerwünschte Verlagerung wenigstens eines plattenförmigen Elements zu unterbinden. Vorzugsweise sind mehr als zwei plattenförmige Elemente des Elektrodenstapels jeweils miteinander verbunden. Besonders bevorzugt sind sämtliche plattenförmigen Elemente des Elektrodenstapels verbunden. Eine Fixiereinrichtung kann auch dazu dienen, die Bewegungsfreiheitsgrade des Elektrodenstapels innerhalb der Umhüllung einzuschränken, vorzugsweise zu unterbinden, vorzugsweise durch eine formschlüssige und/oder kraftschlüssige und/oder stoffschlüssige Verbindung des Elektrodenstapels mit der Umhüllung. Solch eine formschlüssige und/oder kraftschlüssige und/oder stoffschlüssige Verbindung des Elektrodenstapels mit der Umhüllung ist vorzugsweise durch mindestens einen Verbindungspunkt oder Verbindungsabschnitt gegeben. Die Fixiereinrichtung der Schichten des Elektrodenstapels, und die Fixiereinrichtung des Elektrodenstapels innerhalb der Umhüllung können identisch sein. Vorzugsweise dienen als Fixierung auch Klebstoff(e), Klebeband(bänder), Klemme(n), Lötverbindung(en) oder Schweißverbindung(en).

Im Betrieb kann es infolge von Vibrationen oder Beschleunigungen zur unerwünschten Verlagerung wenigstens eines plattenförmigen Elements des Elektrodenstapels oder des gesamten Elektrodenstapels kommen. Auch beim Einsetzen des Elektrodenstapels in ein Gehäuse bzw. eine Umhüllung kann bereits eine unerwünschte Verlagerung wenigstens eines plattenförmigen Elements auftreten. Wenn sich eine Elektrode nicht an dem für sie vorgesehenen Ort innerhalb des Elektrodenstapels befindet, so ist auch die chemische Wechselwirkung mit anderen plattenförmigen Elementen des Elektrodenstapels verringert, insbesondere die Wandlung bzw. Speicherung von Energie. Die tatsächliche Ladekapazität des Elektrodenstapels ist dadurch verringert. Mit der Verbindung bzw. Fixierung von plattenförmigen Elementen des Elektrodenstapels wird eine unerwünschte Verlagerung einzelner plattenförmiger Elemente verringert. Die chemisch aktiven Bereiche des Elektrodenstapels stehen für die Wandlung bzw. Speicherung von Energie zur Verfügung.

Verwendet man für die Fixierung des Elektrodenstapels eine zumindest teilweise folienartig ausgebildete Fixiereinrichtung, die aus einem anderen Polymer als Polypropylen, beispielsweise PET, besteht, so kann es beim weiteren Zusammenbau der elektrochemischen Zelle zur Faltenbildung kommen, welche einen sich eventuell anschließenden Verschließungsvorgang, beispielsweise einen Siegelvorgang, erschwert und sogar zum Austritt von Elektrolytflüssigkeit aus der mit einer Umhüllung versehenen elektrochemischen Zelle führen kann.

Bei Verwendung von Fixiereinrichtungen, aufweisend Polypropylen, hat man überraschend festgestellt, dass diese mit der Umhüllung, beispielsweise beim Versiegeln, verschweißen oder verschmelzen können, wodurch die nachteiligen Folgen der Faltenbildung, beispielsweise erschwertes Siegeln, reduziert, vorzugsweise minimiert, vorzugsweise egalisiert, also nicht mehr relevant werden. Dies gilt vorzugsweise, aber nicht ausschließlich dann, wenn diese Umhüllung ebenfalls Polypropylen aufweist.

Unter Umhüllung ist eine zumindest teilweise Begrenzung zu verstehen, welche den Elektrodenstapel zumindest teilweise umhüllt und zumindest teilweise nach außen hin abgrenzt. Die Umhüllung ist vorzugsweise gas- und flüssigkeitsdicht, sodass ein Materialaustausch mit der Umgebung nicht stattfinden kann. Die Elektrodenstapel sind vorzugsweise teilweise oder vollständig innerhalb der Umhüllung angeordnet. Wenigstens ein Stromableiter, insbesondere zwei Stromableiter erstrecken sich aus der Umhüllung hinaus und dienen zum Anschließen der Elektrodenstapel. Die sich nach außen erstreckenden Stromableiter stellen dabei vorzugsweise den Pluspolanschluss und den Minuspolanschluss der Batteriezelle dar. Jedoch können sich auch mehrere Stromableiter aus der Umhüllung erstrecken, insbesondere vier Stromableiter. Wenn die Batteriezelle dabei zwei Elektrodenstapel aufweist, die miteinander in Reihe geschaltet sind, so sind zwei Elektroden unterschiedlicher Elektrodenstapel miteinander verbunden. Die Umhüllung soll den Durchtritt von Wärmeenergie möglichst wenig beeinträchtigen. Vorliegend weist die Umhüllung wenigstens zwei Formteile auf. Vorzugsweise schmiegen sich die Formteile wenigstens teilweise an einen Elektrodenstapel an. Die Umhüllung kann folienartig ausgebildet sein. Vorzugsweise weist die Umhüllung zumindest teilweise Verbundmaterial auf. Vorzugsweise weist die, dem Elektrodenstapel zugewandte Seite des Verbundmaterials der Umhüllung Polypropylen, oder ein anderes Polymer, welches mit Polypropylen verschweißbar oder verschmelzbar ist, auf, wodurch vorteilhafterweise die Polypropylen aufweisenden Fixierungen des Elektrodenstapels mit der Umhüllung verschweißbar oder verschmelzbar sind.

Ein Stromableiter ist definitionsgemäß ein Element, welches aus einem stromleitenden Material hergestellt ist. Es dient zur Leitung von Strom zwischen zwei geometrisch voneinander getrennten Punkten. Vorliegend ist unter einem Stromableiter auch eine Einrichtung zu verstehen, welche den Fluss von Elektronen aus einer Elektrode in Richtung eines elektrischen Verbrauchers ermöglicht. Der Stromableiter wirkt auch in entgegengesetzter Stromrichtung. Wenigstens ein Stromableiter erstreckt sich aus der Umhüllung und kann dabei zum Anschließen der Batteriezellen nach außen dienen. Ein Stromableiter kann elektrisch mit einer Elektrode bzw. einer aktiven Elektrodenmasse oder mit der Ableiterfahne(n) der Elektroden des Elektrodenstapels und weiter mit einem Anschlusskabel verbunden. Die Gestalt des Stromableiters ist an die Gestalt der elektrochemischen Zelle bzw. des Elektrodenstapels angepasst. Vorzugsweise ist ein Stromableiter plattenförmig oder folienartig ausgebildet. Bevorzugt weist jede Elektrode oder jede Ableiterfahne des Elektrodenstapels einen eigenen Stromableiter auf, bzw. Elektroden oder Ableiterfahnen gleicher Polarität sind mit einem gemeinsamen Stromableiter verbunden. Ein erster Stromableiter kann sich teilweise aus der Umhüllung erstrecken. Ein zweiter Stromableiter kann sich teilweise aus der Umhüllung erstrecken oder kann eine leitfähige Verbindung zwischen zwei Elektrodenstapeln bilden. Vorzugsweise ist ein Stromableiter teilweise beschichtet, wobei die Beschichtung insbesondere elektrisch isolierend ausgebildet ist. Vorzugsweise ist wenigstens ein Stromableiter mit einer Ableiterfahne auch wärmeleitend verbunden. Vorzugsweise wird die Verbindung, insbesondere die wärmeleitende und/oder elektrisch leitende Verbindung, zwischen mindestens einer Ableiterfahne und mindestens einem Stromableiter durch Schweißverfahren, besonders bevorzugt durch Ultraschallschweißen hergestellt. Bei Verwendung mehrere Stromableiter können diese an der gleichen Seite aus der Umhüllung ragen oder an verschiedenen Seiten.

Eine Ableiterfahne ist definitionsgemäß mit einem Elektrodenstapel verbunden. Insbesondere ist die Ableiterfahne dabei mit allen gleichartigen Elektroden eines Elektrodenstapels verbunden, d.h. entweder mit den Kathoden oder mit den Anoden. Es ist selbstverständlich, dass eine Ableiterfahne nicht mit den Kathoden und Anoden eines Elektrodenstapels gleichzeitig verbunden ist, da dies zu einem Kurzschluss führen würde. Jedoch kann eine Ableiterfahne mit unterschiedlichen Elektroden von unterschiedlichen Elektrodenstapeln verbunden sein, so z.B. bei einer Reihenschaltung der beiden Elektrodenstapel. Die Ableiterfahne kann mit einer oder mehreren Elektroden einstückig ausgebildet sein. Eine Abgrenzung zwischen Ableiterfahne und Elektrode kann darin gesehen werden, dass die Ableiterfahne insbesondere nicht mit aktivem Elektrodenmaterial beschichtet ist. Die Ableiterfahne kann aus einem stromund/oder wärmeleitenden Material, vorzugsweise Aluminium oder Kupfer, einstückig oder mehrstückig bzw. einschichtig oder mehrschichtig ausgebildet sein. Vorzugsweise sind alle Ableiterfahnen gleich lang oder haben ein gleiches Ende, welches vom Elektrodenstapel beabstandet ist.

Nachfolgend werden zu bevorzugende Weiterbildungen der Erfindung beschrieben.

Bevorzugt weist der Elektrodenstapel eine Mehrzahl, mindestens zwei Kathoden, Anoden und Separatoren auf. Weiter vorzugsweise weist der Elektrodenstapel eine Vielzahl, mindestens 10 Anoden, Kathoden und Separatoren auf. Weiterhin bevorzugt weist der Elektrodenstapel 30 Kathoden und Anoden, und 60 Separatoren auf. Kathode(n), Anode(n) und Separator(en) sind jeweils plattenförmig ausgebildet.

Vorzugsweise ist die Fixiereinrichtung als Klebverbindung ausgebildet oder weist eine Klebeverbindung auf. In einer nicht erfindungsgemäßen Ausgestaltung liegt die Klebeverbindung als wenigstens ein Klebestreifen vor. Dabei fixiert auch wenigstens ein Klebestreifen die plattenförmigen Elemente sowohl bei der Herstellung als auch bei dem späteren Betrieb. Bei einem Klebestreifen kann ein Klebstoff auf einem Träger aufgebracht sein, wobei der Träger insbesondere dauerhaft an den verbundenen plattenförmigen Elementen verbleibt und auch Kräfte überträgt. Der Träger weist bevorzugt Polypropylen auf, besteht vorzugsweise zumindest teilweise oder vollständig daraus, und ist chemisch beständig gegenüber dem Elektrolyt. Als Klebstoff wird bevorzugt Acrylatkleber oder Silikonkleber verwendet. Der Kleber kann auf einer oder auf beiden Seiten des Trägers aufgebracht werden. Vorzugsweise wird der Klebestreifen so am Elektrodenstapel angeordnet, dass die mit Klebstoff beschichtete Seite des Trägers den Elektroden zugewandt ist, die mit Klebstoff beschichtete Seite kann aber auch der Umhüllung zugewandt sein. Vorzugsweise ist wenigstens ein Klebestreifen an wenigstens einem Außenrand eines oder mehrerer der plattenförmigen Elemente angeordnet.

Bevorzugt verläuft wenigstens ein Klebestreifen wenigstens teilweise um den Elektrodenstapel oder um den gesamten Elektrodenstapel. Vorzugsweise ist wenigstens ein Klebestreifen an wenigstens einer Ecke des Elektrodenstapels angeordnet. Vorzugsweise ist wenigstens ein Klebestreifen an wenigstens einer Seite des Elektrodenstapels angeordnet. Vorzugsweise ist wenigstens ein Klebestreifen Bestandteil eines Rahmens, welcher die plattenförmigen Elemente auch umgeben kann und den Elektrodenstapel zusätzlich stabilisiert. Bevorzugt muss der Klebstreifen auch nicht zusätzlich zu dem Rahmen gefertigt und angebracht werden.

In einer erfindungsgemäßen Ausgestaltung ist die Fixiervorrichtung als wenigstens ein Klebepunkt zwischen plattenförmigen Elementen, insbesondere an den Ecken der plattenförmigen Elemente angeordnet. Ein Klebepunkt ist einfach und an wohl definierten Stellen anzubringen und bietet auch eine ordnungsgemäße Fixierung der Elemente des Elektrodenstapels. Vorzugsweise sind plattenförmige Elemente mit mehreren Klebepunkten insbesondere an den Ecken des Elektrodenstapels verbunden. Ein Klebepunkt ist bevorzugt zumindest teilweise als Körper ausgebildet, welcher vorzugsweise zumindest teilweise, vorzugsweise größtenteils, vorzugsweise vollständig aus Polypropylen aufgebaut ist, und welcher auf der Oberfläche zumindest teilweise mit einem Klebstoff, vorzugsweise Acrylatkleber oder Silik(:mkleber, beschichtet sein kann. Ein Klebepunkt ist vorzugsweise ein plattenartiges Element, dessen Oberfläche im Vergleich zu Oberfläche der Kathode, Anode oder des Separators sehr klein ist, insbesondere um einen Faktor 50, 100, 200 oder 500 kleiner als die Oberfläche Kathode, Anode oder des Separators.

In einer weiteren erfindungsgemäßen Ausgestaltung ist wenigstens eine Kleberaupe zwischen plattenförmigen Elementen oder entlang wenigstens eines Randes eines plattenförmigen Elements ausgebildet. Vorzugsweise sind mehrere plattenförmige Elemente entlang ihrer Begrenzungskanten mit mehreren Kleberaupen verbunden. Derartige Kleberaupen stabilisieren nicht nur die Anordnung einzelner plattenförmiger Elemente des Elektrodenstapels zueinander, sondern wirken vorteilhaft auch als zusätzliche Isolierung zur Verringerung von Energieverlusten an den Begrenzungskanten der Elektroden. Eine Kleberaupe ist bevorzugt zumindest teilweise als Körper ausgebildet, welcher vorzugsweise zumindest teilweise, vorzugsweise größtenteils, vorzugsweise vollständig aus Polypropylen aufgebaut ist, und welcher auf der Oberfläche zumindest teilweise mit einem Klebstoff, vorzugsweise Acrylatkleber oder Silikonkleber, beschichtet sein kann. Eine Kleberaupe ist vorzugsweise ein langgestrecktes, plattenartiges oder zylinderartiges Bauteil, dessen Länge um mindestens einen Faktor 2, 5, 10, 50 oder 100 größer ist als seine Breite.

Bevorzugt weist die Fixiereinrichtung eine Lasche auf, welche vorzugsweise zumindest teilweise aus Polypropylen besteht, vorzugsweise hauptsächlich aus Polypropylen besteht, vorzugsweise vollständig aus Polypropylen besteht, und mit der Umhüllung verschmolzen werden kann, und zumindest teilweise auf der Oberfläche mit einem Klebstoff, vorzugsweise Acrylat-oder Silikon kleber, beschichtet sein kann.

Vorzugsweise ist die Fixiereinrichtung einteilig oder mehrteilig ausgebildet.

Vorzugsweise können mehrere Teile mindestens einer Fixiereinrichtung oder mehrere Fixiereinrichtungen voneinander beabstandet sein, vorzugsweise so, dass eine gleichmäßig verteilte Anordnung der Teile der Fixiereinrichtung an und/oder um den Elektrodenstapel erhalten werden kann.

Bevorzugt können mehrere Teile mindestens einer Fixiereinrichtung oder mehrere Fixiereinrichtungen miteinander in Kontakt stehen, insbesondere formschlüssig und/oder kraftschlüssig und/oder stoffschlüssig miteinander verbunden sein.

Bevorzugt ist die Fixiereinrichtung flexibel, insbesondere elastisch, oder starr ausgebildet, oder kann flexible und/oder starre Teile aufweisen.

Vorzugsweise weist eine elektrochemische Zelle einen Elektrodenstapel, eine Umhüllung bzw. Verpackung des Elektrodenstapels und elektrische Anschlüsse bzw. Stromableiter und/oder Ableiterfahnen zu den Elektroden auf. Die Umhüllung trennt auch den Elektrodenstapel von der Umgebung und verhindert den Austritt von Elektrolyt. Durch die Fixierung der plattenförmigen Elemente des Elektrodenstapels untereinander eignet sich ein solcher Elektrodenstapel besonders für die Konfektionierung einer elektrochemischen Zelle. Vorteilhaft bleibt auch die gegenseitig fixierte Lage der plattenförmigen Elemente des Elektrodenstapels während des späteren Betriebs der elektrochemischen Zelle erhalten.

Erfindungsgemäß ist auch das Verfahren zur Herstellung der Anordnung eines Elektrodenstapels, aufweisend mindestens eine Anodenschicht, mindestens eine Kathodenschicht und mindestens eine Separatorschicht, welche zwischen dieser mindestens einen Anodenschicht, und dieser mindestens einen Kathodenschicht angeordnet ist, wobei das Verfahren den Schritt umfasst, dass eine Fixiereinrichtung bereitgestellt wird, welche die gestapelten Elektrodenschichten und die dazwischen angeordneten Separatorschicht(en) fixiert, wobei die Fixiereinrichtung zumindest teilweise aus Polypropylen besteht.

Das Verfahren weist vorzugsweise den Schritt auf, dass mindestens eine Fixiereinrichtung, vorzugsweise mindestens ein Klebestreifen, zumindest teilweise an zumindest einer Elektrode angeordnet wird. Erfindungsgemäß wird auch ein Verfahren zur Herstellung einer elektrochemischen Zelle bereitgestellt, das vorzugsweise die Schritte des erfindungsgemäßen Verfahrens zur Herstellung der erfindungsgemäßen Anordnung des Elektrodenstapels beinhaltet.

Bevorzugt wird der Elektrodenstapel so hergestellt, dass dessen plattenförmige Elemente mit wenigstens einem Positionierungshilfsmittel positioniert werden, insbesondere mit wenigstens einer Schablone oder einem Rahmen und/oder mindestens einem Klemmmittel. Vorzugsweise weist ein Positionierungshilfsmittel wenigstens einen Anschlag für jeweils wenigstens eine Begrenzungskante eines plattenförmigen Elements auf. Vorzugsweise ist ein Positionierungshilfsmittel so beschaffen, dass es als Teil einer Fertigungsvorrichtung ein automatisiertes Positionieren plattenförmiger Elemente leistet.

Bevorzugt wird der Elektrodenstapel, dessen Elektroden jeweils wenigstens eine Ableiterfahne aufweisen, so hergestellt, dass wenigstens je eine Ableiterfahne einer Kathode und/oder einer Anode zu deren Positionierung benutzt werden. Dabei werden insbesondere Begrenzungskanten der Ableiterfahnen parallel ausgerichtet. Vorzugsweise wirkt bei der Herstellung des Elektrodenstapels, insbesondere beim Stapeln der plattenförmigen Elemente, ein Positionierungshilfsmittel mit Ableiterfahnen zusammen. Insbesondere weist ein Positionierungshilfsmittel wenigstens einen Anschlag für jeweils wenigstens eine Begrenzungskante einer Ableiterfahne auf.

Bevorzugt wird der Elektrodenstapel, dessen Elektroden jeweils wenigstens eine Ableiterfahne aufweisen, so hergestellt, dass wenigstens zwei Ableiterfahnen nach dem Positionieren miteinander verbunden, insbesondere formschlüssig und/oder kraftschlüssig und/oder stoffschlüssig verbunden werden. Diese Verbindung erfolgt bevorzugt mittels Löten oder Schweißen. Je nach Anordnung der Elektroden bzw. deren Ableiterfahnen können die Elektroden beim Verbinden in Parallelschaltung und/oder Reihenschaltung verschaltet werden. Vorzugsweise wird gemeinsam mit wenigstens zwei Ableiterfahnen einer Elektrode, beispielsweise der Kathode, mindestens einen Stromableiter verbunden, insbesondere elektrisch-und/oder wärmeleitend und/oder stoffschlüssig und/oder formschlüssig und/oder kraftschlüssig verbunden, insbesondere durch Schweißen, bevorzugt Ultraschallschweißen. Je nach Anordnung der Elektroden bzw. deren Ableiterfahnen können die Ableiterfahnen nach deren Positionierung unterschiedliche Längen aufweisen. Vorzugsweise werden die unterschiedlich langen Ableiterfahnen nach deren Positionierung, und vor oder nach deren optionalen Verbindung, aber vor der Verbindung mit mindestens einem Stromableiter, auf eine Länge gebracht, was vorzugsweise durch Schneiden geschehen kann, insbesondere durch Schneiden mit Laser. Die Ableiterfahnen können vor oder nach deren Positionierung und/oder vor oder nach deren Verbindung und/oder vor oder nach der Verbindung mit dem mindestens einen Stromableiter gefaltet und/oder gerollt und/oder gewickelt und/oder abgewinkelt und/oder gedreht und/oder durch sonstige Verfahren in ihrer ursprünglichen Ausbreitungsorientierung, beispielsweise in z-Richtung, verändert werden, sodass die nach der Anwendung des Verfahrens hauptsächliche Ausbreitungsorientierung eine andere ist, beispielsweise in x-Richtung, oder wieder die Ursprüngliche ist.

In einer nicht erfindungsgemäßen Ausgestaltung wird der Elektrodenstapel so hergestellt, dass wenigstens zwei plattenförmige Elemente mit wenigstens einem Klebestreifen verbunden werden. Vorzugsweise werden mehrere plattenförmige Elemente mittels wenigstens eines Klebestreifens verbunden. Bevorzugt wird wenigstens ein Klebestreifen wenigstens teilweise entlang wenigstens je einer Begrenzungskante von wenigstens zwei plattenförmigen Elementen angebracht. Vorzugsweise wird wenigstens ein Klebestreifen an je wenigstens einer Ecke von wenigstens zwei plattenförmigen Elementen angebracht. Bevorzugt wird wenigstens ein Klebestreifen um den Elektrodenstapel angebracht. Für Klebestreifen werden auch Klebebänder synonym verwendet.

Besonders bevorzugt werden vier Klebestreifen auf der den Stromableitern gegenüber liegenden Seite, jeweils 2 Klebestreifen an den zu der Seite der Stromableiter senkrecht stehenden Seite, und ein Klebestreifen zwischen den Stromableitern am Elektrodenstapel angebracht. Vorzugsweise weist der Klebestreifen jeweils eine erste Elektrodenschicht und eine letzte Elektrodenschicht auf. Besagte Klebestreifen können auch als Klemmen ausgebildet sein. Besonders bevorzugt besteht das Trägermaterial der Klebestreifen aus Polypropylen.

Bevorzugt wird der Elektrodenstapel so hergestellt, dass wenigstens ein Klebepunkt zur Verbindung von wenigstens zwei plattenförmigen Elementen angebracht wird. Der wenigstens eine Klebepunkt wird bevorzugt zwischen zwei plattenförmigen Elementen angebracht. Vorzugsweise wird wenigstens ein Klebepunkt an je einer Begrenzungskante von wenigstens zwei plattenförmigen Elementen angebracht. Vorzugsweise wird wenigstens eine Kleberaupe zwischen zwei plattenförmigen Elementen aufgetragen. Vorzugsweise wird wenigstens eine Kleberaupe teilweise entlang je einer Begrenzungskante von wenigstens zwei plattenförmigen Elementen aufgetragen.

Bevorzugt werden vor dem Stapeln Fixierungsmittel an den plattenförmigen Elementen des Elektrodenstapels angebracht. Damit wird der Stapel auch bereits vor der Fertigstellung fixiert, sodass sich ein ansonsten eventuell erforderliches Ausrichten der plattenförmigen Elemente des Elektrodenstapels erübrigt. In diesem Fall können die Fixierungsmittel wiederum Klebstoffstreifen oder Klebstoffpunkte oder Klemmen sein, wobei jedoch das Material des Klebstoffs nicht unbedingt gegenüber dem Elektrolyt beständig sein muss, da diese Fixierungsmittel nur während der Herstellungsschritte aushalten müssen und danach durch die Fixierungsmittel nach dem Stapeln und beim Konfektionieren ersetzt werden. Als Fixierungsmittel, die vor dem Stapeln der plattenförmigen Elemente des Elektrodenstapels angewendet werden, können vorzugsweise ein flüssiger Kleber oder ein Heißkleber, die sofort aushärten, gewählt werden. Vorzugsweise kommt als Klebstoff ein Acrylatklebstoff oder ein EVA modifizierter PE-Schmelzkleber in Betracht.

Bevorzugt wird eine elektrochemische Zelle oder galvanische Zelle so hergestellt, dass ein Elektrodenstapel, der in der vorstehend beschriebenen Weise fixiert worden ist, in eine Umhüllung überführt wird, wirkt sich die Vorfixierung des Stapels bei seiner Herstellung sowohl beim Einfügen des Elektrodenstapels in die Umhüllung als auch später beim Betrieb in der Umhüllung vorteilhaft aus. Bei der Umhüllung kann es sich insbesondere um eine Verbundfolie oder ein biegesteifes Gehäuse handeln. Die Umhüllung trennt auch den Elektrodenstapel von der Umgebung und verhindert den Austritt von Elektrolyt.

Weitere Vorteile, Merkmale und Anwendungsmöglichkeiten der vorliegenden Erfindung ergeben sich aus der nachfolgenden Beschreibung in Zusammenhang mit den Figuren. Dabei zeigen:
- Fig. 1: einen schematischen Querschnitt eines ersten Ausführungsbeispiels der erfindungsgemäßen Anordnung des Elektrodenstapels;
- Fig. 2: einen schematischen Querschnitt eines zweiten Ausführungsbeispiels der erfindungsgemäßen Anordnung des Elektrodenstapels;
- Fig. 3: einen schematischen Querschnitt eines dritten Ausführungsbeispiels der erfindungsgemäßen Anordnung des Elektrodenstapels;
- Fig. 4: einen schematischen Querschnitt eines vierten Ausführungsbeispiels der erfindungsgemäßen Anordnung des Elektrodenstapels;
- Fig. 5: einen schematischen Querschnitt eines fünften Ausführungsbeispiels der erfindungsgemäßen Anordnung des Elektrodenstapels;
- Fig. 6: den schematischen Querschnitt eines sechsten Ausführungsbeispiels der erfindungsgemäßen Anordnung des Elektrodenstapels;
- Fig. 7: die schematische Aufsicht auf die Anordnung des Elektrodenstapels von Figur 1;
- Fig. 8: die schematische Aufsicht auf die Anordnung des Elektrodenstapels von Figur 2;
- Fig. 9: die schematische Aufsicht auf die Anordnung des Elektrodenstapels von Figur 3;
- Fig. 10: die schematische Aufsicht auf die Anordnung des Elektrodenstapels von Figur 4; und
- Fig. 11: ein Ausführungsbeispiel des erfindungsgemäßen Verfahrens zum Zusammenbau einer erfindungsgemäßen Anordnung des Elektrodenstapels.

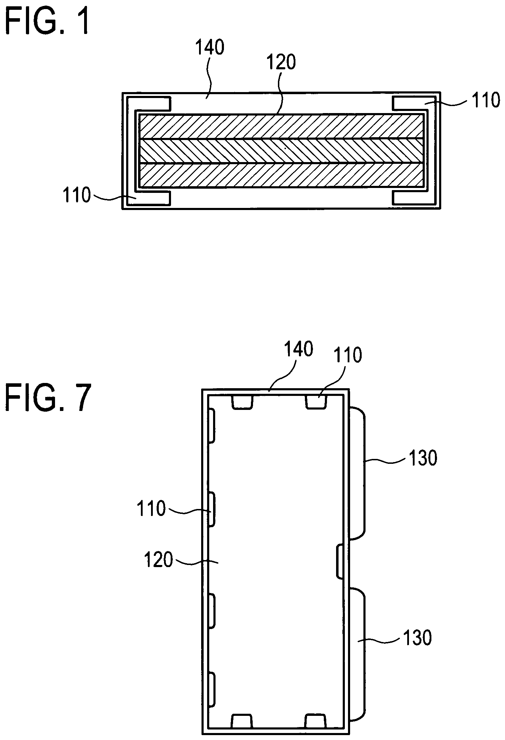

Gemäß Fig. 1 und 7 weist ein Elektrodenstapel Elektrodenschichten 120 aus alternierenden Anoden-, und Kathoden-, und Separatorschichten (Reihenfolge variabel) auf, ebenso wie Klammern oder Klebebänder 110, welche an den Seiten des Elektrodenstapels 120 in senkrechter Orientierung zu den Elektrodenschichten angebracht sind.

Die Klammern oder Klebebänder 110 können, wie in Fig. 1 und 7 dargestellt, an allen vier Seiten des Elektrodenstapels angeordnet sein. Die Klammern oder Klebebänder 110 können aber auch an drei oder zwei oder einer Seiten des Elektrodenstapels 120 angeordnet sein. Eine bevorzugte Anordnung der Klebebänder oder Klammern 110 ist wie folgt: Anordnung von vier Klebebändern oder Klammern 110 in gleichmäßigen Abständen auf der Seite, die der Ableiterfahnen mit angebrachten Stromableitern 130 aufweisenden Seite gegenüber liegt, Anordnung von jeweils zwei Klebebändern oder Klammern 110 auf beiden Seiten, welche zur Seite, welche die Ableiterfahnen mit angebrachten Stromableitern 130 aufweist, zumeist senkrecht angeordnet sind, Anordnung eines Klebebandes oder einer Klammer 110 zwischen den beiden Ableiterfahnen mit angebrachten Stromableitern 130. Die Ableiterfahnen mit angebrachten Stromableitern 130 können, wie in Fig. 1 und 7 gezeigt, aus der gleichen Seite des Elektrodenstapels 120 in die Umgebung ragen. Die Ableiterfahne(n) mit angebrachten Stromableitern 130 können auf der gleichen oder auf unterschiedlichen Höhen aus dem Elektrodenstapel in die Umgebung ragen, beispielsweise ragt eine Ableiterfahne mit angebrachtem Stromableiter 130 auf Höhe der ersten Kathodenschicht aus dem Elektrodenstapel in die Umgebung, während eine zweite Ableiterfahne mit angebrachtem Stromableiter 130 auf Höhe der letzten Kathodenschicht aus dem Elektrodenstapel in die Umgebung ragt (nicht dargestellt).

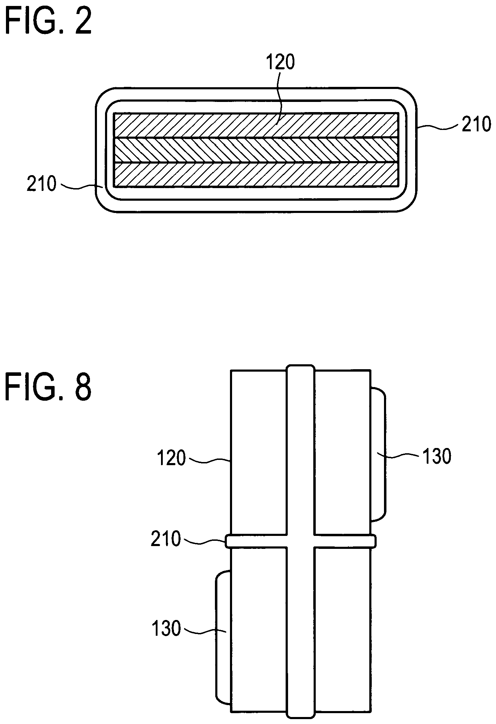

In Fig. 1 und 7 ist zudem eine folienartige Umhüllung 140 angedeutet, die den Elektrodenstapel 120 fluiddicht, d.h. gasdicht und flüssigkeitsdicht umhüllt. Die Stromableiter 130 ragen aus dieser Umhüllung 140 zumindest teilweise heraus. Obwohl nicht dargestellt, ist diese oder eine andere Umhüllung 140 üblicherweise auch bei den anderen Ausführungsbeispielen der Fig. 2 bis 10 vorgesehen.

Gemäß Fig. 2 und 8 weist ein Elektrodenstapel Elektrodenschichten aus alternierenden Anoden-, und Kathoden-, und Separatorschichten (Reihenfolge variabel) auf, ebenso wie Klebebänder 210, welche einmal vollständig um den Elektrodenstapel 120 herum gewickelt sind. Die Verlaufsorientierung der Klebebänder 210 kann senkrecht zueinander sein, es ist aber auch eine senkrechte und/oder parallele Orientierung zueinander möglich. Die Anzahl der verwendeten Klebebänder 210 ist variabel. Die Ableiterfahne(n) mit Stromableiter 130 ragen auf gegenüberliegenden Seiten aus dem Elektrodenstapel 120 in die Umgebung. Die Ableiterfahne(n) mit angebrachten Stromableitern 130 können auf der gleichen oder auf unterschiedlichen Höhen aus dem Elektrodenstapel in die Umgebung ragen (nicht dargestellt).

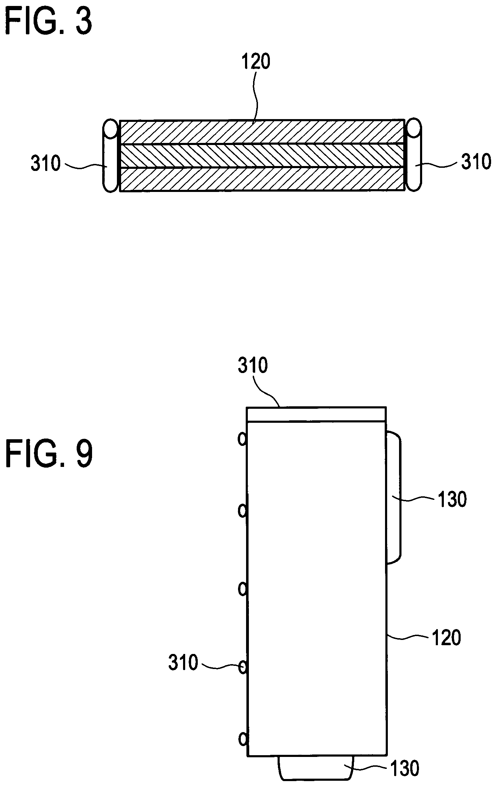

Gemäß Fig. 3 und 9 weist ein Elektrodenstapel Elektrodenschichten aus alternierenden Anoden-, und Kathoden-, und Separatorschichten (Reihenfolge variabel) auf, ebenso wie eine Mehrzahl von Kleberaupen 310, welche an verschiedenen Seiten mit senkrechter und/oder paralleler Orientierung zu den Schichten an den Seiten des Elektrodenstapels 120 angebracht sind. Die Ableiterfahnen mit angebrachten Stromableiter 130 ragen an verschiedenen Seiten aus dem Elektrodenstapel in die Umgebung. Die Ableiterfahne(n) mit angebrachten Stromableitern 130 können auf der gleichen oder auf unterschiedlichen Höhen aus dem Elektrodenstapel 120 in die Umgebung ragen (nicht dargestellt).

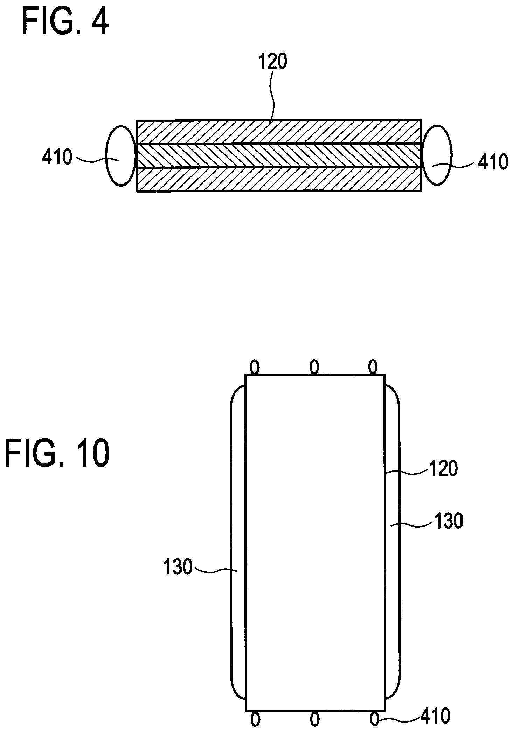

Gemäß Fig. 4 und 10 weist ein Elektrodenstapel 120 Elektrodenschichten aus alternierenden Anoden-, und Kathoden-, und Separatorschichten (Reihenfolge variabel) auf, ebenso wie Klebepunkte 410, welche an gegenüber liegenden Seiten des Elektrodenstapels angebracht sind. Die Klebepunkte 410 können aber auch an einer, drei oder vier Seite(n) des Elektrodenstapels 120 angebracht sein (nicht dargestellt). Die Ableiterfahne(n) mit Stromableiter 430 ragen auf gegenüber liegenden Seiten auf der gesamten Länge der Seiten des Elektrodenstapels aus dem Elektrodenstapel in die Umgebung. Die Ableiterfahne(n) mit angebrachten Stromableitern 130 können auf der gleichen oder auf unterschiedlichen Höhen aus dem Elektrodenstapel in die Umgebung ragen (nicht dargestellt).

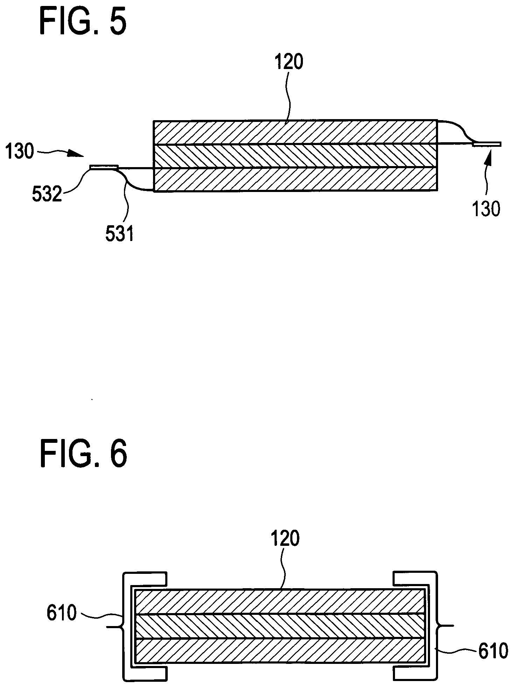

Gemäß Fig. 5 weist ein Elektrodenstapel 120 Elektrodenschichten aus alternierenden Anoden-, und Kathoden-, und Separatorschichten (Reihenfolge variabel) auf. Der schematische Querschnitt (Fig. 5) des Ausführungsbeispiels zeigt, wie die gebündelten Ableiterfahnen 531 der Anoden bzw. Kathoden aus dem Elektrodenstapel 120 in unterschiedlicher Höhe des Elektrodenstapels in die Umgebung ragen. Die Stromableiter 532 können mit den Ableiterfahnen 531 über einen bestimmten Bereich hinweg überlappen.

Gemäß Fig. 6 weist ein Elektrodenstapel 120 Elektrodenschichten aus alternierenden Anoden-, und Kathoden-, und Separatorschichten (Reihenfolge variabel) auf, ebenso wie Klebebänder oder Klammern mit Laschen 610, welche an den Seiten des Elektrodenstapels 120 angebracht sind.

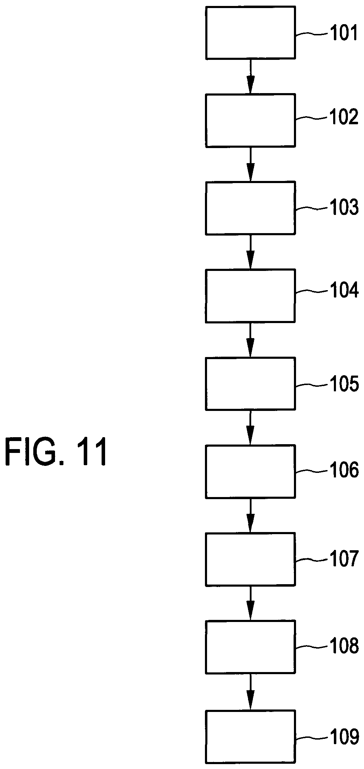

Gemäß Fig. 11 weist das Verfahren zum Zusammenbau eines Ausführungsbeispiels einer Anordnung eines Elektrodenstapels 120 folgende Verfahrensschritte in optionaler Reihenfolge auf:
- Bereitstellen eines Elektrodenstapels (Schritt 101),
- Bereitstellen von neun Sicherheitseinrichtungen, ausgebildet als Klebestreifen (Schritt 102),
- Anordnen der Sicherheitseinrichtungen am Elektrodenstapel (Schritt 103), wobei eine bevorzugte Anordnung der neun Sicherheitseinrichtungen wie folgt aussieht: Anordnen einer Sicherheitseinrichtung zwischen den Ableitereinrichtungen, welche auf einer Seite aus dem Elektrodenstapel ragen; Anordnen von vier Sicherheitseinrichtungen auf der, dieser Seite mit Ableiterfahnen gegenüber liegenden Seite, Anordnen von jeweils zwei Sicherheitseinrichtungen an den beiden Seiten, welche senkrecht zur Seite mit den Ableiterfahnen angeordnet sind,
- Positionieren der Ableiterfahnen (Schritt 104),
- Schneiden der Ableiterfahnen, vorzugsweise durch Laser, auf eine im Wesentlichen gleiche Länge (Schritt 105),
- Verbinden der Ableiterfahnen mit den Stromableitern, vorzugsweise durch Ultraschallschweißen (Schritt 106),
- Bereitstellen der Umhüllung (Schritt 107),
- Anordnen der Umhüllung an dem unter Verfahrensschritt 103 zusammengebauten Elektrodenstapel mit Sicherheitseinrichtung(en) (Schritt 108),
- zumindest teilweise Verschließen des unter Verfahrensschritt 105 assemblierten Elektrodenstapels mit Sicherheitseinrichtung(en) und Umhüllung, vorzugsweise durch Verschweißen und/oder Verschmelzen (Schritt 109).

### BEZUGSZIFFERNLISTE

- 101 - 109: Verfahrensschritte
- 110: Klebeband oder Klammer
- 120: Elektrodenstapel
- 130: Ableitervorrichtung / Ableiterfahne(n) mit Stromableiter
- 140: Umhüllung
- 210: Klebeband oder Klammer
- 310: Kleberaupe
- 410: Klebepunkt
- 531: Ableiterfahne(n)
- 532: Stromableiter
- 610: Klebeband oder Klammer mit Lasche

## Patentansprüche

1. Anordnung eines Elektrodenstapels (120), aufweisend mindestens eine Anodenschicht, mindestens eine Kathodenschicht und mindestens eine Separatorschicht, welche zwischen dieser mindestens einen Anodenschicht und dieser mindestens einen Kathodenschicht angeordnet ist, und mindestens einer Fixiereinrichtung (310, 410), welche mindestens zwei Schichten des Elektrodenstapels (120) relativ zueinander fixiert, wobei diese mindestens eine Fixiereinrichtung (310, 410) als Kleberaupe oder Klebepunkt ausgebildet ist, welche bzw. welcher an einer Seite des Elektrodenstapels (120) angebracht ist,
**dadurch gekennzeichnet, dass**
die Kleberaupe oder der Klebepunkt zumindest teilweise aus Polypropylen besteht.

2. Elektrodenstapel gemäß Anspruch 1,
**dadurch gekennzeichnet, dass**
die mindestens eine Fixiereinrichtung ( 310,410) die gestapelten Anoden-, Kathoden- und Separatorschichten des Elektrodenstapels (120) fixiert.

3. Elektrodenstapel gemäß einem der vorhergehenden Ansprüche,
**dadurch gekennzeichnet, dass**
der Elektrodenstapel (120) mindestens eine Ableiterfahne (531) aufweist; und die Ableiterfahne (531) mittels einer Fixiereinrichtung fixiert ist.

4. Elektrochemische Zelle, aufweisend mindestens einen Elektrodenstapel (120) gemäß einem der vorhergehenden Ansprüche und mindestens eine Umhüllung (140), die den Elektrodenstapel zumindest teilweise umhüllt.

5. Elektrochemische Zelle gemäß Anspruch 4,
**dadurch gekennzeichnet, dass**
die Umhüllung (140) zumindest teilweise aus Verbundmaterial besteht, welches mindestens eine innere Schicht aufweist, welche zumindest teilweise aus Polypropylen besteht.

6. Elektrochemische Zelle gemäß Anspruch 5,
**dadurch gekennzeichnet, dass**
die Fixiereinrichtung (310, 410) und/oder der Elektrodenstapel (120) stoffschlüssig mit der Umhüllung (140) verbunden sind, indem die Fixiereinrichtung mit der inneren Schicht der Umhüllung verschweißt ist.

7. Verfahren zur Herstellung einer Anordnung eines Elektrodenstapels (120) mit mindestens einer Anodenschicht, mindestens einer Kathodenschicht und mindestens einer Separatorschicht, welche zwischen dieser mindestens einen Anodenschicht und dieser mindestens einen Kathodenschicht angeordnet ist,
wobei das Verfahren den Schritt des Fixierens von mindestens zwei Schichten des Elektrodenstapels (120) relativ zueinander mittels mindestens einer Fixiereinrichtung (310, 410) in Form einer Kleberaupe oder eines Klebepunktes, die bzw. der an einer Seite des Elektrodenstapels (120) angebracht ist, aufweist,
**dadurch gekennzeichnet, dass**
die Kleberaupe oder der Klebepunkt zumindest teilweise aus Polypropylen besteht.

8. Verfahren gemäß Anspruch 7,
**dadurch gekennzeichnet, dass**
das Verfahren ferner den Schritt aufweist, dass wenigstens eine Ableiterfahne (531) des Elektrodenstapels (120) an zumindest einem Stromableiter (532) insbesondere kraftschlüssig und/oder formschlüssig und/ oder stoffschlüssig angebracht wird, vorzugsweise durch Schweißen oder Ultraschallschweißen.

9. Verfahren gemäß Anspruch 7 oder 8,
**dadurch gekennzeichnet, dass**
das Verfahren ferner den Schritt aufweist, dass bei mindestens zwei Ableiterfahnen (531) des Elektrodenstapels (120) diese vor ihrer Anbringung an zumindest einen Stromableiter (532) gebündelt und auf gleiche Länge gebracht werden.

10. Verfahren gemäß einem der Ansprüche 7 bis 9,
**dadurch gekennzeichnet, dass**
das Verfahren ferner den Schritt aufweist, dass mindestens eine Umhüllung (140) um den fixierten Elektrodenstapel (120) angeordnet wird.

11. Verfahren gemäß Anspruch 10,
**dadurch gekennzeichnet, dass**
das Verfahren ferner den Schritt aufweist, dass die Umhüllung (140) mit der Fixiereinrichtung (310, 410) und/oder dem Elektrodenstapel (120) insbesondere stoffschlüssig verbunden wird.

12. Verfahren gemäß Anspruch 11,
**dadurch gekennzeichnet, dass**
die Umhüllung (140) zumindest teilweise aus Verbundmaterial besteht, welches mindestens eine innere Schicht aufweist, welche zumindest teilweise aus Polypropylen besteht; und der fixierte Elektrodenstapel (120) mit der Umhüllung (140) verschweißt wird.

## Claims

1. Electrode stack arrangement (120) having at least one anode layer, at least one cathode layer and at least one separator layer which is arranged between this at least one anode layer and this at least one cathode layer and at least one fixing means (310, 410) which fixes at least two layers of the electrode stack (120) relative to each other, wherein this at least one fixing means (310, 410) is formed as a glue bead or glue dot which is applied to one side of the electrode stack (120),
**characterised in that**
the glue bead or glue dot consists at least partially of polypropylene.

2. Electrode stack according to claim 1,
**characterised in that**
the at least one fixing means (310, 410) fixes the stacked anode, cathode and separator layers of the electrode stack (120).

3. Electrode stack according to one of the preceding claims,
**characterised in that**
the electrode stack (120) has at least one deflector tab (531), and the deflector tab (531) is fixed by means of a fixing means.

4. Electrochemical cell having at least one electrode stack (120) according to one of the preceding claims and at least one shell (140) which at least partially surrounds the electrode stack.

5. Electrochemical cell according to claim 4,
**characterised in that**
the shell (140) consists at least partially of composite material which has at least one inner layer which consists at least partially of polypropylene.

6. Electrochemical cell according to claim 5,
**characterised in that**
the fixing means (310, 410) and / or the electrode stack (120) is / are connected in a material-locking way to the shell (140) by the fixing means being welded to the inner layer of the shell.

7. Method for producing an electrode stack arrangement (120) having at least one anode layer, at least one cathode layer and at least one separator layer which is arranged between this at least one anode layer and this at least one cathode layer,
wherein the method has the step of fixing at least two layers of the electrode stack (120) relative to each other by means of at least one fixing means (310, 410) in the form of a glue bead or a glue dot which is applied to one side of the electrode stack (20), **characterised in that**
the glue bead or the glue dot consists at least partially of polypropylene.

8. Method according to claim 7,
**characterised in that**
the method further has the step that at least one deflector tab (531) of the electrode stack (120) is applied to at least one current deflector (532), in particular in a force-locking and / or positively locking and / or material-locking way, preferably by welding or ultrasonic welding.

9. Method according to claim 7 or 8,
**characterised in that**
the method further has the step that in the case of at least two deflector tabs (531) of the electrode stack (120) these are bundled together and made the same length before they are applied to at least one current deflector (532).

10. Method according to one of claims 7 to 9,
**characterised in that**
the method further has the step that at least one shell (140) is arranged around the fixed electrode stack (120).

11. Method according to claim 10,
**characterised in that**
the method further has the step that the shell (140) is connected, in particular in a material-locking way, to the fixing means (310, 410) and / or the electrode stack (120).

12. Method according to claim 11,
**characterised in that**
the shell (140) consists at least partially of composite material which has at least one inner layer which consists at least partially of polypropylene, and the fixed electrode stack (120) is welded to the shell (140).

## Revendications

1. Agencement d'un empilement (120) d'électrodes, présentant au moins une couche d'anode, au moins une couche de cathode et au moins une couche de séparation, qui est disposée entre ladite au moins une couche d'anode et ladite au moins couche de cathode, et au moins un dispositif de fixation (310, 410), qui fixe au moins deux couches de l'empilement (120) d'électrodes l'une à l'autre, ledit au moins un dispositif de fixation (310, 410) étant conçu comme un cordon de colle ou un point de colle, qui est appliqué sur un côté de l'empilement d'électrodes (120), **caractérisé en ce que** le cordon de colle ou le point de colle est constitué en partie de polypropylène.

2. Empilement d'électrodes selon la revendication 1, **caractérisé en ce que** l'au moins un dispositif de fixation (310, 410) fixe les couches empilées d'anode, de cathode et de séparation de l'empilement (120) d'électrodes.

3. Empilement d'électrodes selon l'une quelconque des revendications précédentes, **caractérisé en ce que** l'empilement (120) d'électrodes présente au moins une cosse conductrice (531) et la cosse conductrice (531) est fixée au moyen d'un dispositif de fixation.

4. Cellule électrochimique, comprenant au moins un empilement (120) d'électrodes selon l'une quelconque des revendications précédentes et au moins une enveloppe (140) qui entoure au moins partiellement l'empilement d'électrodes.

5. Cellule électrochimique selon la revendication 4, **caractérisé en ce que** l'enveloppe (140) est constituée au moins partiellement d'un matériau composite, qui présente au moins une couche intérieure qui est au moins en partie constituée de polypropylène.

6. Cellule électrochimique selon la revendication 5, **caractérisé en ce que** le dispositif de fixation (310, 410) et/ou l'empilement (120) d'électrodes sont reliés par liaison de matière à l'enveloppe (140), le dispositif de fixation étant soudé à la couche intérieure de l'enveloppe.

7. Procédé de fabrication d'un agencement d'empilement (120) d'électrodes comprenant au moins une couche d'anode, au moins une couche de cathode et au moins une couche de séparation, qui est disposée entre ladite au moins une couche d'anode et ladite au moins une couche de cathode, le procédé présentant l'étape de fixation d'au moins deux couches de l'empilement (120) d'électrodes l'une à l'autre au moyen d'au moins un dispositif de fixation (310, 410) en forme de cordon de colle ou d'un point de colle, qui est appliqué sur un côté de l'empilement (120) d'électrodes, **caractérisé en ce que** le cordon de colle ou le point de colle est constitué au moins en partie de polypropylène.

8. Procédé selon la revendication 7, **caractérisé en ce que** le procédé comprend en outre l'étape dans laquelle au moins une cosse conductrice (531) de l'empilement (120) d'électrodes est appliquée sur au moins un conducteur de courant (532) en particulier par liaison de force et/ou par liaison de forme et/ou par liaison de matière, de préférence par soudage ou par soudage à ultrasons.

9. Procédé selon la revendication 7 ou la revendication 8, **caractérisé en ce que** le procédé présente en outre l'étape, dans laquelle au moins deux cosses conductrices (531) de l'empilement (120) d'électrodes, avant leur application sur au moins un conducteur de courant (532) sont regroupées en faisceau et sont égalisées à la même longueur.

10. Procédé selon l'une quelconque des revendications 7 à 9, **caractérisé en ce que** le procédé présente en outre l'étape dans laquelle au moins une enveloppe (140) est disposée autour de l'empilement (120) d'électrodes fixé.

11. Procédé selon la revendication 10, **caractérisé en ce que** le procédé présente en outre l'étape, dans laquelle l'enveloppe (140) est reliée au dispositif de fixation (310, 410) et/ou à l'empilement (120) d'électrodes en particulier par liaison de matière.

12. Procédé selon la revendication 11, **caractérisé en ce que** l'enveloppe (140) est constituée au moins en partie d'un matériau composite, qui au moins présente une couche intérieure qui est constituée au moins en partie de polypropylène et l'empilement (120) d'électrodes fixé est soudé à l'enveloppe (140).
